# EUROPÄISCHE PATENTANMELDUNG

(11) **EP 2 127 576 A1**
(43) Veröffentlichungstag der Anmeldung: **02.12.2009**
(21) Anmeldenummer: 09006681.2
(22) Anmeldetag: 18.05.2009
(51) Int. Cl.: A47J 37/07

(54) **Grill**

(30) Priorität: 30.05.2008 DE 202008007484 U
(71) Anmelder: Hof, Jürgen, 70186 Stuttgart (DE)
(72) Erfinder: Hof, Jürgen, 70186 Stuttgart (DE)
(74) Vertreter: Grünecker, Kinkeldey, Stockmair & Schwanhäusser Anwaltssozietät

(57) **Zusammenfassung**

Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), wobei das Gehäuse (1) in der Draufsicht eine im Wesentlichen elliptische Form hat.

## Beschreibung

Die Erfindung bezieht sich auf einen Grill mit einem zweiteiligen, aus einer Brennstoffschale und einer mit dieser durch eine lösbare Verschlusseinrichtung verbindbaren Deckelschale bestehenden Gehäuse, einem im Gehäuse transportierbaren und in der Betriebsstellung des Grills an der Brennstoffschale abstützbaren Grillrost, einer außen an der Brennstoffschale lösbar anbringbaren, im Gehäuse transportierbaren Aufstelleinrichtung, und einem am Gehäuse vorgesehenen Tragelement.

Ziel der Erfindung ist es, einen solchen in einem Gehäuse tragbaren und mit wenigen Handgriffen aufstellbaren Grill in seinem Gebrauchszweck, insbesondere hinsichtlich seiner Handlichkeit, Aufstellsicherheit und Transportfähigkeit, zu verbessern.

Ein erster Aspekt der Erfindung besteht darin, dass das Gehäuse in der Draufsicht eine im Wesentlichen elliptische Form hat.

Eine solche Form hat gegenüber in der Grundgestalt rechteckigen Grillgehäusen den Vorteil, dass keine Verletzungsgefahr durch scharfkantige Ecken besteht, dass es keine schwer zu reinigenden Innenecken gibt und dass während des Grillbetriebs keine ungenutzten Eckbereiche vorhanden sind. Gegenüber einer runden Form hat die elliptische Form den Vorteil, dass der verpackte Grill aufrecht stehend gelagert werden kann, weil er eine abgeflachte Ellipsenseite hat, und dass er bei einer gegebenen Grundfläche wegen des unterschiedlichen Verhältnisses von Höhe zu Breite in einem handelsüblichen Geschirrspüler gereinigt werden kann.

Ein anderer Aspekt der Erfindung besteht darin, dass die Verschlusseinrichtung wenigstens zwei Spannbügelverschlüsse aufweist, deren Spannbügel im hochgeklappten Zustand Abstützelemente für den Grillrost bilden.

Damit wird der Verschlusseinrichtung eine Doppelfunktion zugewiesen, nämlich einmal, die Brennstoffschale mit der Deckelschale in geschlossenem Zustand fest zu verbinden, und zum anderen, beim Betrieb des Grills den Grillrost oberhalb der Brennstoffschale abgestützt zu tragen. Dieser Gedanke lässt sich nicht nur bei Spannbügelverschlüssen, sondern bei allen Verschlüssen verwirklichen, bei denen ein Verschlussteil vorhanden ist, der bei gelöstem Verschluss weit genug nach oben geklappt werden kann, um den Grillrost abzustützen.

Der Vorteil einer solchen Konstruktion besteht darin, dass keine gesonderten Stützteile für den Grillrost vorhanden zu sein brauchen.

Ein weiterer Erfindungsaspekt ist darin zu sehen, dass die Deckelschale auf ihrer Innenseite mit einem Steckteil zum Aufstecken der Deckelschale auf den Rand der Brennstoffschale versehen ist.

Dadurch kann die Deckelschale ohne aufwändige Scharnier- oder sonstige Gelenkkonstruktionen beim Betrieb des Grills als Schutzwand verwendet werden. Bei einem Grill der eingangs erläuterten Gattung, bei dem eine Abdeckplatte vorgesehen ist, die unter dem Grillrost in die Brennstoffschale mit Abstand von deren Boden einlegbar ist, um in der Brennstoffschale einen Transportraum für Brennstoff abzugrenzen, besteht ein weiterer Aspekt der Erfindung darin, dass die vorzugsweise aus Metall besehende Abdeckplatte entlang ihres Umfangsrandes mit einer Dichtung versehen ist, die gegen die Innenfläche der Seitenwand der Brennstoffschale abdichtet.

Hierdurch wird nicht nur sichergestellt, dass bei lose in der Brennstoffschale transportiertem Brennstoff keine staub- oder kornförmigen Partikel entweichen können; vielmehr ermöglicht es eine Abdichtung zwischen der Abdeckplatte und der Innenwand der Brennstoffschale bei feuerfester Ausbildung der Abdeckplatte und der Dichtung, die Verbrennungsrückstände im Grillgehäuse zu transportieren, so dass diese nicht am Grillort entsorgt werden müssen, sondern an eine geeignete Entsorgungsstelle gebracht werden können.

Bei einem Grill der vorstehend beschriebenen, eine Abdeckplatte aufweisenden Art, ist ein weiterer Erfindungsaspekt darin zu sehen, dass die Abdeckplatte als Träger für die Aufstelleinrichtung in deren Betriebszustand ausgebildet ist.

Bei dieser Konstruktion wird der Abdeckplatte eine weitere Funktion zugewiesen, nämlich bei aufgestelltem Grill eine Basis für die Aufstelleinrichtung zu bilden und dadurch eine bessere Abstützung am Boden und eine Stabilisierung der Aufstelleinrichtung zu erreichen.

Bei einem Grill der vorstehend definierten Art mit einer Abdeckplatte, bei der die Aufstelleinrichtung aus Stäben besteht, ist ein weiterer Aspekt der Erfindung darin zu sehen, dass an der Abdeckplatte Halteklammern für die Stäbe derart angebracht sind, dass sie bei in der Transportstellung befindlichem Grillrost durch diesen hindurch ragen.

Diese Bauweise ermöglicht es, die Stäbe beim Transport des Grills im Gehäuse zwischen dessen Deckelschale und dem Grillrost sicher in den Klammern zu halten. Zugleich wird dadurch die Position des Grillrosts in der Transportstellung durch Verklemmen zwischen den Stäben und der Abdeckplatte gesichert.

Bei einem Grill der vorstehend beschriebenen Gattung mit einer Abdeckplatte ist ein weiterer Aspekt der Erfindung darin zu sehen, dass die Abdeckplatte auf einer Seite mit Anschlusselementen für die Aufstelleinrichtung in deren Betriebszustand versehen ist, und zweckmäßigerweise auf der anderen Seite Aufstellfüße aufweist.

Diese Gestaltung verbessert die Funktion der Abdeckplatte als Aufstellbasis für den Grill.

Ein weiterer Erfindungsaspekt des Grills der eingangs definierten Gattung besteht darin, dass an der Außenfläche des Gehäuses ein Kopplungselement angebracht ist, das lösbar mit einem Gegenkopplungselement an einem Fahrrad koppelbar ist.

Diese Gestaltung bringt den sehr bedeutsamen Vorteil mit sich, dass der Grill bequem am Fahrrad mitgeführt und dadurch bei Grillereignissen eingesetzt werden kann, deren Veranstaltungsort per Fahrrad aufgesucht wird.

Bei einem Grill mit einer Brennstoffschale, an der ein Grillrost abstützbar ist, und mit einer Grillzange ist mit einem weiteren Aspekt der Erfindung vorgesehen, dass die Grillzange mit Greifelementen zum formschlüssigen Erfassen und Tragen des Grillrosts versehen ist.

Mit dieser Gestaltung wird der bei Grills üblicherweise vorhandenen und zum Aufbringen, Wenden und Abheben der zu grillenden Nahrungsmittel verwendeten Grillzange die weitere Aufgabe zugewiesen, als Instrument zum Ausheben, Einfügen und Tragen des Grillrosts dienen zu können. Es sind dadurch keine besonderen Hilfsmittel erforderlich, um den häufig heißen und mit Nahrungsmittelrückständen verschmutzten Grill ausheben und transportieren zu können.

Die vorstehend beschriebenen Erfindungsaspekte können an einem Grill einzeln oder in beliebigen Kombinationen oder Unterkombinationen verwirklicht werden. Weitere vorteilhafte Gestaltungen sind den abhängigen Schutzansprüchen zu entnehmen.

Nachstehend wird ein Ausführungsbeispiel eines die verschiedenen Erfindungsaspekte verwirklichenden Grills in Verbindung mit den Zeichnungen beschrieben. In diesen zeigt:
- Fig. 1: eine perspektivische Ansicht eines erfindungsgemäßen Grills im Transportzustand,
- Fig. 2: eine Unteransicht des Grills nach Fig. 1,
- Fig. 3: eine perspektivische Ansicht des Grills in einer Transportstellung am Fahrrad,
- Fig. 4: eine Draufsicht auf den Grill bei abgenommener Deckelschale,
- Fig. 5: einen schematischen Querschnitt durch den Grill nach Fig. 4 entlang der Schnittlinie V-V,
- Fig. 6: eine perspektivische Seitenansicht des Grills im aufgestellten Zustand,
- Fig. 7: eine perspektivische Stirnansicht des Grills im aufgestellten Zustand,
- Fig. 8: eine perspektivische Ansicht des Grills im aufgestellten Zustand schräg von vorne oben,
- Fig. 9: eine Seitenansicht des Grills im aufgestellten Zustand,
- Fig. 10: eine Detailansicht des Steckteils für die Deckelschale, und
- Fig. 11: eine Detailansicht der zum Grill gehörenden Grillzange mit einem Ausschnitt des Grillrosts.

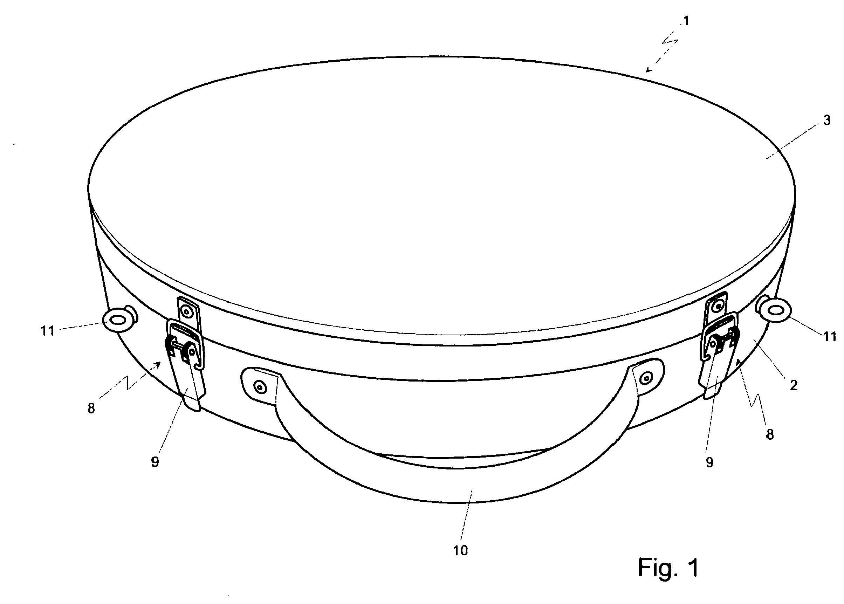

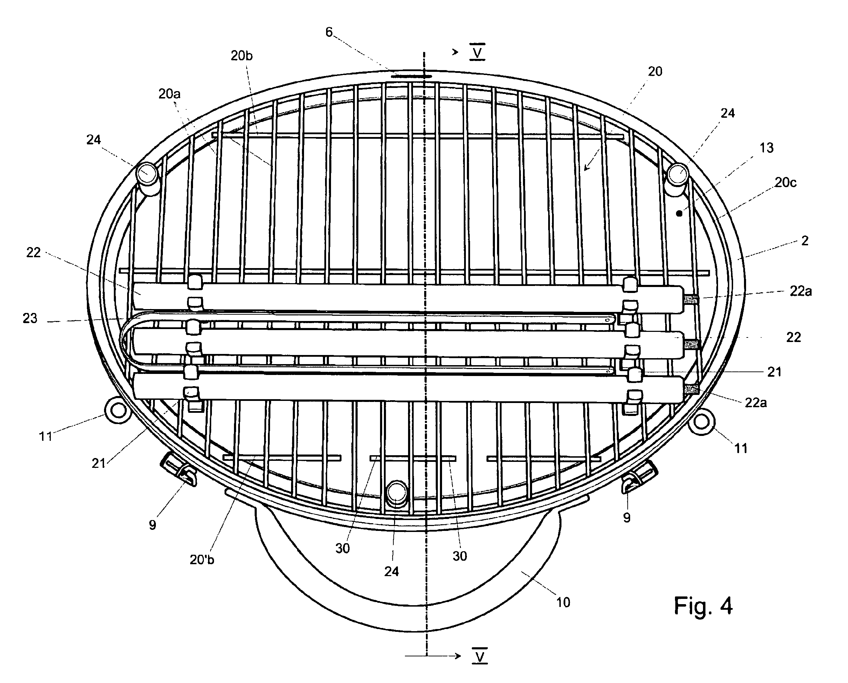

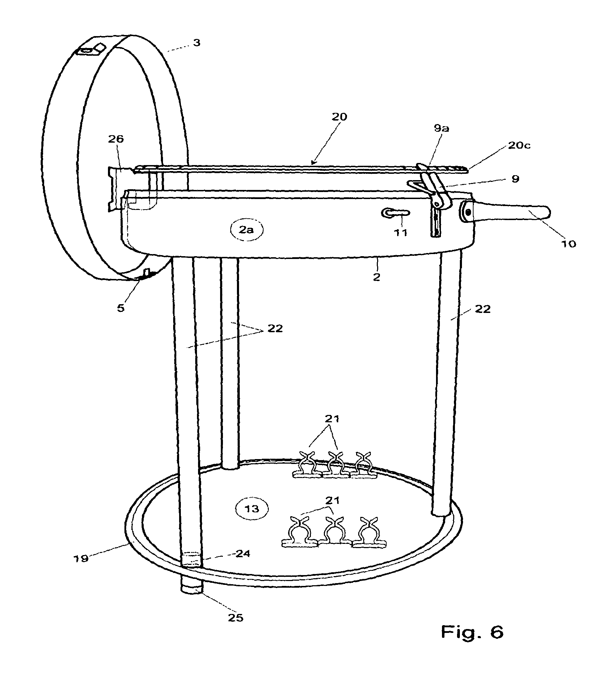

Wie in Fig. 1 gezeigt, hat der erfindungsgemäße Grill eine im Wesentlichen elliptische bzw. ovale Grundform. Sein Gehäuse 1 besteht aus einer unteren Brennstoffschale 2 und einer oberen Deckelschale 3. Die Schalen 2, 3 sind in dem in Fig. 1 dargestellten Transportzustand an einer Längsseite des Ovals über einen Steckfuß 5 (Fig. 6) und einen Steckschlitz 6 (Fig. 4) und an der gegenüberliegenden Längsseite des Ovals mittels Spannbügelverschlüssen 8 mit Spannbügeln 9 fest verbunden.

An der Brennstoffschale 2 (wahlweise auch an der Deckelschale 3) ist ein Tragegriff 10 befestigt, so dass das Gehäuse 1 bequem in der Hand getragen werden kann.

Ferner sind an der Brennstoffschale 2 (wahlweise auch an der Deckelschale 3) Ösen 11 zum Befestigen eines Traggurts angebracht, damit der Grill auch über der Schulter getragen werden kann.

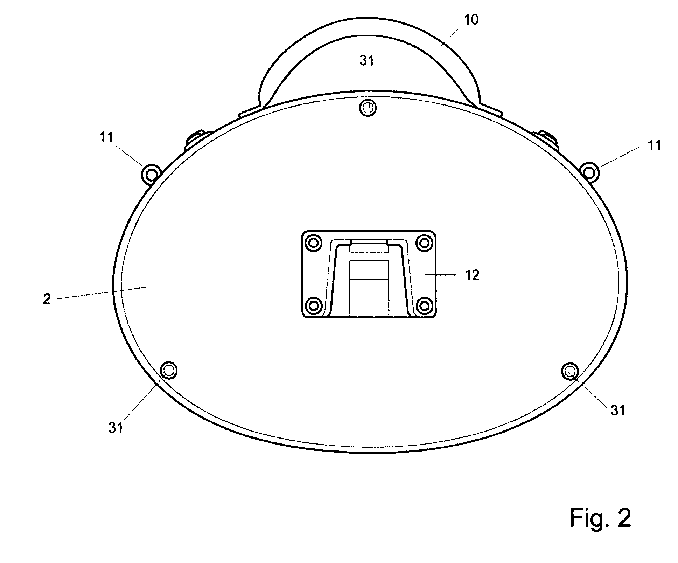

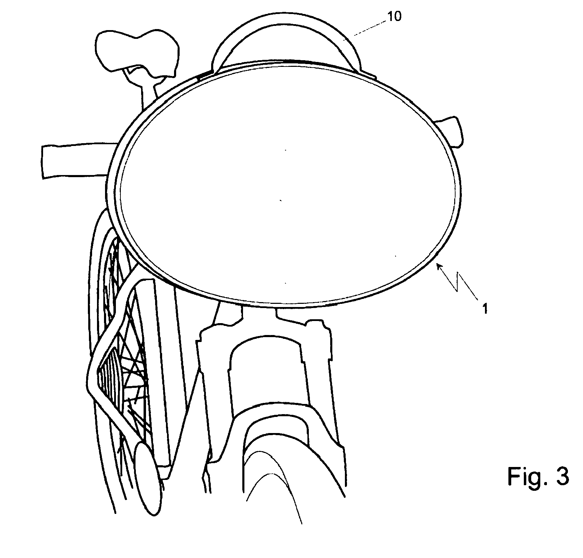

Wie aus Fig. 2 ersichtlich ist, ist an der Bodenseite der Brennstoffschale ein Kopplungselement 12 angebracht, mit dem das Gehäuse 1 an einem handelsüblichen, nicht näher dargestellten Gegenkopplungselement eines Fahrrads lösbar angekoppelt werden und in der aus Fig. 3 ersichtlichen Weise am Fahrrad mitgeführt werden kann. Geeignet hierfür ist beispielsweise ein Fahrrad-Kopplungssystem, wie es von der Firma Basil BV, Ulft, Niederlande erhältlich ist.

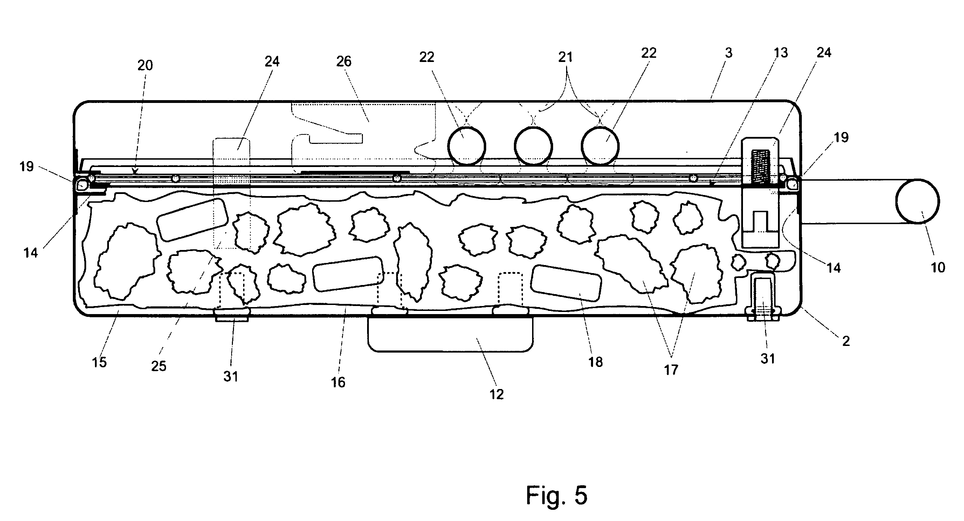

Wie aus Fig. 4 und 5 erkennbar, ist im Transportzustand des Grills im Bereich des oberen Randes der Brennstoffschale 2 auf an der Innenwand der Brennstoffschale 2 befestigten Winkelstützen 14 eine Abdeckplatte 13 abgestützt. Diese, aus feuerfestem Material, beispielsweise Metall, bestehende Abdeckplatte 13 begrenzt in der Brennstoffschale 2 nach oben zu einen Transportraum 15, in dem vor dem Grillen der Brennstoff, beispielsweise in Form von in einem Beutel 16 eingeschlossenen Holzkohleteilen 17 mit Brandbeschleunigerelementen 18, und nach dem Grillen die Brennstoffrückstände transportiert werden können. Um ein Entweichen von Brennstoff oder Brennstoffrückständen aus dem Raum 15 sicher zu vermeiden, ist die Abdeckplatte 13 ringsum mit einer elastischen, aus feuerfestem Material, wie einem feuerfesten Kunststoff, bestehenden Dichtung 19 eingefasst, die sich im Transportzustand des Grills dichtend gegen die Innenwand der Brennstoffschale 2 anlegt.

Im Transportzustand (Fig. 4 und 5) liegt in der Brennstoffschale 2 oberhalb der Abdeckplatte 13 ein in seiner Außenkontur der Innenkontur der Brennstoffschale 2 angepasster Grillrost 20, der aus Querstäben 20a, Längsstäben 20b und einem Randstab 20c zusammengesetzt ist.

In der Abdeckplatte 13 sind Federklammern 21 befestigt, die im Transportzustand des Grills zwischen den Stäben des Grillrosts 20 nach oben vorragen. Diese Federklammern dienen zum Aufnehmen von Stäben 22, die Bestandteil der Aufstelleinrichtung des Grills sind, wie weiter unten noch erläutert werden wird.

Schließlich gehört zu dem erfindungsgemäßen Grill eine Grillzange 23, die in der Transportstellung zwischen den Stäben 22 bzw. den Federklammern 21 liegt, wie insbesondere aus Fig. 4 deutlich ersichtlich ist.

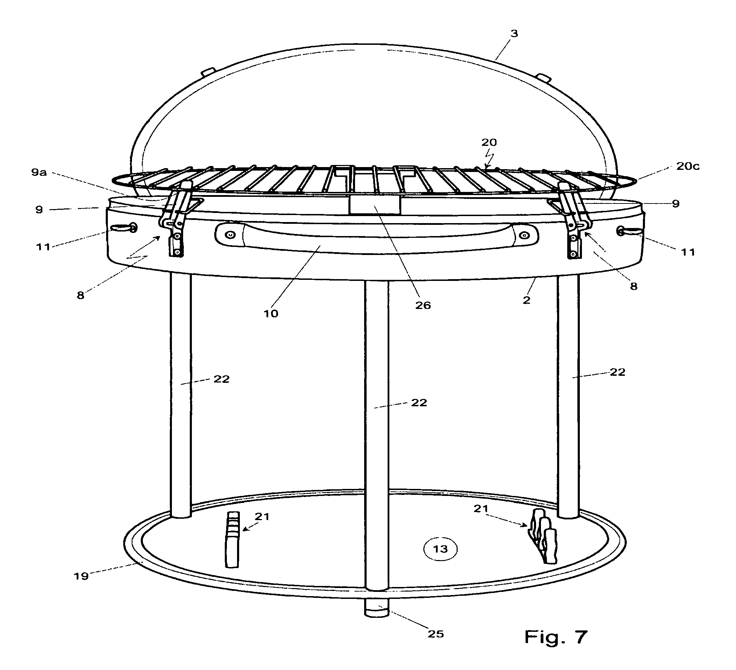

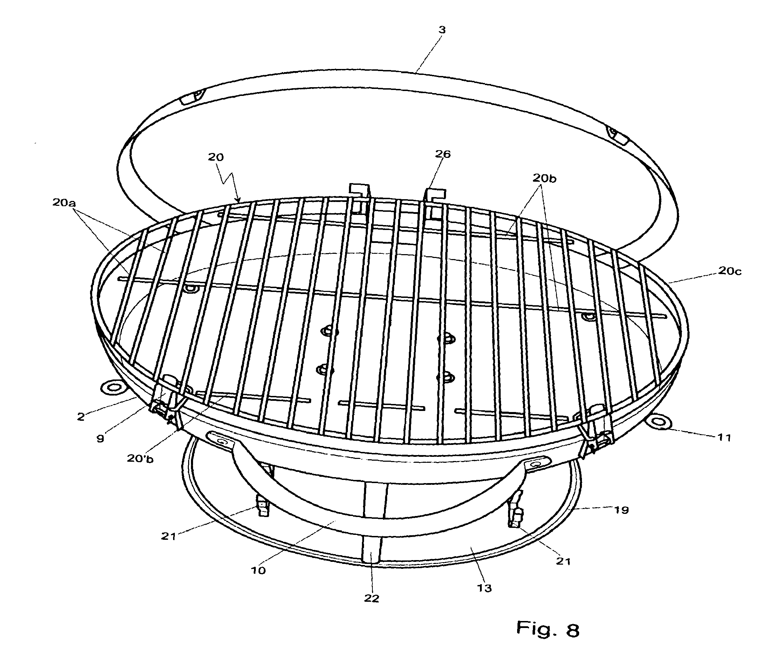

Um den Grill in den aus den Fig. 6-9 ersichtlichen Aufstellzustand zu bringen, wird zunächst die Deckelschale 3 nach Lösen der Spannhebelverschlüsse 8 von der Brennstoffschale abgenommen. Dann werden die Abdeckplatte 13 mit dem daraufliegenden Grillrost 20 und den an der Abdeckplatte 13 gehalterten Stäben 22 sowie die Grillzange 23 aus der Brennstoffschale entnommen.

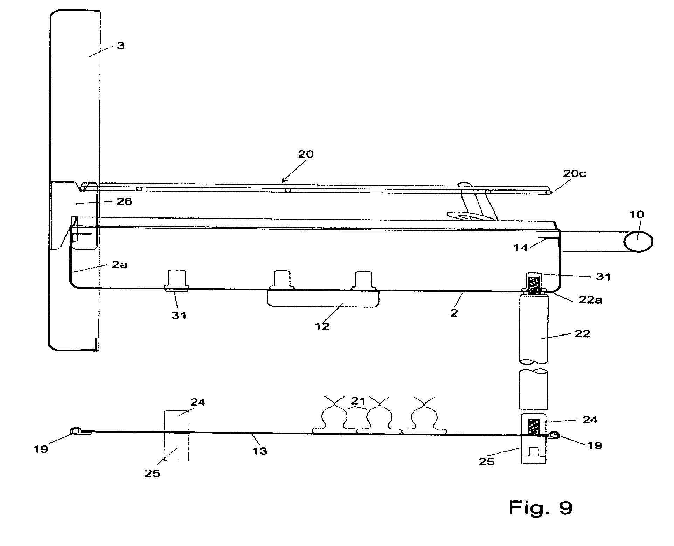

Anschließend werden die Stäbe 22 mit an ihren einen Enden angebrachten Gewindezapfen 22a (Fig. 4) in im Boden der Brennstoffschale 2 gehalterten Gewindehülsen 31 (Fig. 5) eingeschraubt, wie dies insbesondere aus Fig. 9 erkennbar ist. Die von den Gewindezapfen 22a abgewandten Enden der, vorzugsweise aus nicht-rostendem Stahl bestehenden Stäbe 22, sind rohrförmig ausgebildet und werden beim Aufstellen des Grills auf zapfenförmige Anschlusselemente 24 aufgesteckt, die mittels Schraubverbindung an der Oberseite der Abdeckplatte 13 angebracht sind (Fig. 9).

Auf der Unterseite der Abdeckplatte 13 sind gegenüber den Aufsteckelementen 24 an der Abdeckplatte 13 Aufstellfüße 25 befestigt. Details der Konstruktion sind der Fig. 9 rechts unten zu entnehmen, wo erkennbar ist, dass die Aufstellfüße 25 mit Gewindezapfen versehen sind, die mit Löchern in die Abdeckplatte 13 ragen. Auf diese sind dann die als Hohlzapfen ausgebildeten Anschlusselemente 24 zum Aufstecken der Stäbe 22 aufgeschraubt.

Somit bildet die Abdeckplatte 13 im Betriebszustand des Grills eine solide, über die Aufstellfüße 25 dreipunktartig auf dem Boden ruhende Basis, die über die drei Stäbe 22 stabil die Brennstoffschale 2 des Grills trägt.

In diesem Montagezustand kann der Brennstoff in der Brennstoffschale 2 betriebsbereit gemacht und ggf. schon gezündet werden.

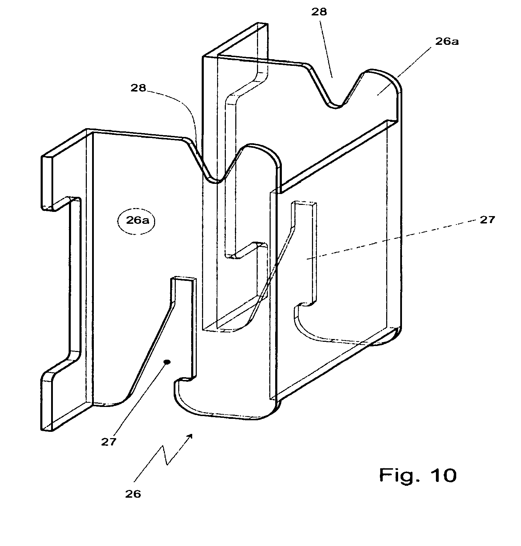

Die Deckelschale 3 wird in der insbesondere aus den Fig. 6 und 9 ersichtlichen Weise auf die Seitenwand 2a der Brennstoffschale 2 lösbar aufgesteckt. Zu diesem Zweck ist die Deckelschale 3 auf ihrer Innenseite mit einem in Fig. 10 detailliert dargestellten Steckteil 26 versehen, der als im Wesentlichen U-förmiger Bügel ausgebildet ist, der mit seinem offenen Bügelende an der Innenseite der Deckelschale 3 befestigt ist. In die Bügelschenkel 26a sind nach unten offene, miteinander fluchtende Schlitze 27 eingearbeitet, deren besonders günstige Form im Detail aus Fig. 10 erkennbar ist. Mit diesen Schlitzen kann die Deckelschale 3 einfach auf die Seitenwand 2a der Brennstoffschale 2 in der insbesondere aus Fig. 6 und 9 ersichtlichen Weise aufgesteckt werden, wo sie sich aufgrund der besonderen Form der Schlitze 27 verklemmt.

In den oberen Rändern der Bügelschenkel 26a sind miteinander fluchtende Mulden 28 vorgesehen. In diese wird im Betriebszustand des Grills der oval gebogene Randstab 20c des Grillrosts 20 eingelegt. Auf der gegenüberliegenden Seite wird der Grillrost 20 mit seinem Randstab 20c auf Absätze 9a der nach oben geschwenkten und gegen die Außenseite der Seitenwand 2a der Brennstoffschale 2 abgestützten Spannbügel 9 aufgelegt. Die Spannbügelverschlüsse 8 sind zu diesem Zweck so dimensioniert und ausgestaltet, dass die Absätze 9a bei hochgeschwenkten und außen an der Brennstoffschale 2 abgestützten Spannbügeln 9 in der gleichen Höhe liegen, wie die Mulden 28 des Steckteils 26. Dadurch kann der Grillrost auf einfache Weise stabil in einer Stellung abgestützt werden, in der er sich etwas oberhalb des oberen Randes der Brennstoffschale 2 befindet.

Um den Grill wieder aus dem Betriebszustand in den Transportzustand zu bringen, geht man in zu der geschilderten Reihenfolge umgekehrter Reihenfolge vor.

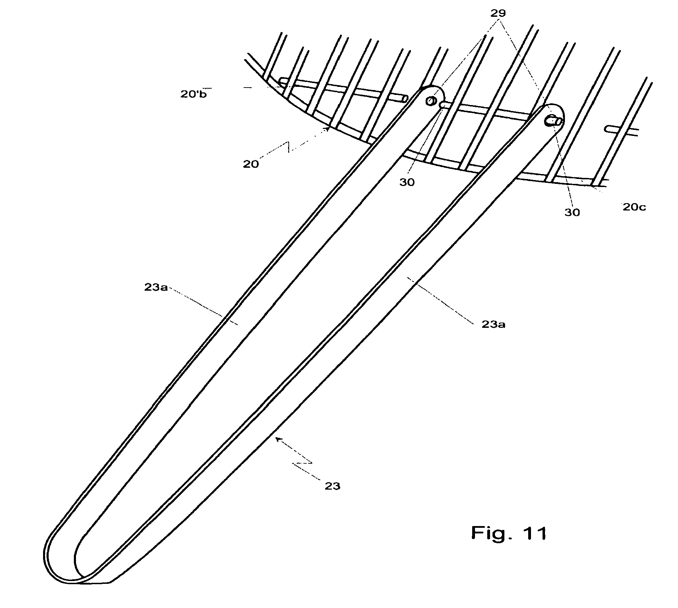

Die zu dem Grill gehörende und zum Erfassen des Grillguts dienende Grillzange 23 ist in der aus Fig. 11 ersichtlichen Weise an den freien Enden ihrer Schenkel mit Löchern 29 versehen. Einer der Längsstäbe des Grillrosts 20, nämlich der in Fig. 11 mit 20'b bezeichnete, seitliche Längsstab des Grillrosts, ist in der aus Fig. 4 und Fig. 11 ersichtlichen Weise in seinem Mittelbereich an zwei Stellen unterbrochen. Das verbleibende Mittelstück bildet dadurch an seinen Enden freistehende Zapfen 30, deren Abstand so gewählt ist, dass die Löcher 29 der Grillzange 23 auf sie aufgeschoben werden können. Der Längsstab 20'b befindet sich an einer solchen Stelle zwischen dem Schwerpunkt des Grillrosts 20 und dessen Randstab 20c, dass sich der Randstab bei an den Zapfen 30 mittels der Grillzange 23 gehaltenem Rost von unten gegen die Schenkel der Grillzange 23a anlegt, so dass der Grillrost 20 mit in den Löchern 29 steckenden Zapfen 30 stabil und sicher getragen werden kann. Dadurch kann die Grillzange 23 nicht nur zum Handhaben des Grillguts, sondern auch zum Ausheben und Transportieren des Grillrosts verwendet werden. Selbstverständlich könnten die Zapfen 30 auch als gesonderte Teile am Grillrost an geeigneter Stelle befestigt sein.

Im vorliegenden Ausführungsbeispiel ist eine optimale Konstruktion beschrieben. Vereinfachungen, namentlich aus Kostengründen, sind im Rahmen der Erfindung jedoch möglich. So können die Stäbe 22 mit der Brennstoffschale 2 auch so verbunden werden, dass im Schalenboden durch Tiefziehen Stecklöcher gebildet werden, in die die oberen Enden der Stäbe 22 eingesteckt und evtl. durch eine Nut-Feder-Verbindung oder einen Bajonettverschluss gegen Herausziehen gesichert werden. Ähnlich kann die Verbindung zwischen den Stäben 22 und der Abdeckplatte 13 im montierten Zustand des Grills gestaltet werden. Hierzu müssten in die Abdeckplatte topfartige Vertiefungen eingeformt werden, die nach unten über die Abdeckplatte vorstehen und die Aufstellfüße bilden. Von oben könnten dann die Stäbe 22 in diese Vertiefungen eingesteckt werden. Die Grillzange muss sich beim Ausheben des Grillrosts 20 nicht mit den Unterkanten der Zangenschenkel 23a auf dem Randstab 20c des Grillrosts abstützen; vielmehr können die Zapfen 30 auch in einen weiter innen liegenden Bereich des Grillrostes angeordnet werden, so dass beim Ausheben ein weiter zum Rand hin liegender Längsstab 20b zur Anlage an den Unterkanten der Zangenschenkel 23a kommt. Der Brennstoff muss nicht unbedingt in einer Hülle 16 transportiert werden. Da der Transportraum 15 in der Transportstellung des Grills hermetisch abgeschlossen ist, kann der Brennstoff auch lose in den Transportraum eingefüllt werden.

Der Gebrauchszweck ist besonders gut erfüllt, wenn alle beschriebenen Merkmale verwirklicht sind. Es ist jedoch für den Fachmann verständlich, dass auch einzelne der beschriebenen Merkmale den Gebrauchszweck des Grills für sich steigern.

## Patentansprüche

1. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), **dadurch gekennzeichnet, dass** das Gehäuse (1) in der Draufsicht eine im Wesentlichen elliptische Form hat.

2. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), **dadurch gekennzeichnet, dass** die Aufstelleinrichtung wenigstens drei Stäbe (22) umfasst.

3. Grill nach Anspruch 2, **dadurch gekennzeichnet, dass** die Stäbe (22) wenigstens in einem Endbereich als Rohre ausgebildet sind.

4. Grill nach Anspruch 2 und 3, **dadurch gekennzeichnet, dass** die Stäbe (22) einenends ein Schraubelement (22a) aufweisen, das mit je einem Gegenschraubelement (23) an der Außenseite der Brennstoffschale (2) zusammenpasst.

5. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), **dadurch gekennzeichnet, dass** die Verschlusseinrichtung (8) zugleich zum Abstützen des Grillrostes (20) an der Brennstoffschale (2) ausgebildet ist.

6. Grill nach Anspruch 5, **dadurch gekennzeichnet, dass** die Verschlusseinrichtung (8) wenigstens zwei Spannbügelverschlüsse aufweist, deren Spannbügel (9) im hochgeklappten Zustand Abstützelemente für den Grillrost (20) bilden.

7. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), **dadurch gekennzeichnet, dass** die Deckelschale (3) auf ihrer Innenseite mit einem Steckteil (26) zum Aufstecken der Deckelschale (3) auf den Rand der Brennstoffschale (2) versehen ist.

8. Grill nach Anspruch 7, **dadurch gekennzeichnet, dass** der Steckteil (26) zugleich als Abstützelement für den Grillrost (20) ausgebildet ist.

9. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), wobei eine Abdeckplatte (13) vorgesehen ist, die unter dem Grillrost (20) in die Brennstoffschale (2) mit Abstand von deren Boden einlegbar ist, um in der Brennstoffschale (2) einen Transportraum (15) für Brennstoff (17, 18) abzugrenzen, **dadurch gekennzeichnet, dass** die vorzugsweise aus Metall bestehende Abdeckplatte (13) entlang ihres Umfangsrandes mit einer Dichtung (19) versehen ist, die gegen die Innenfläche der Seitenwand (2a) der Brennstoffschale (2) abdichtet.

10. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), wobei eine Abdeckplatte (13) vorgesehen ist, die unter dem Grillrost (20) in die Brennstoffschale (2) mit Abstand von deren Boden einlegbar ist, um in der Brennstoffschale (2) einen Transportraum (15) für Brennstoff (17, 18) abzugrenzen, **dadurch gekennzeichnet, dass** die Abdeckplatte (13) als Träger für die Aufstelleinrichtung (22, 13) in deren Betriebszustand ausgebildet ist.

11. Grill mit einer aus Stäben (22) besehenden Aufstelleinrichtung, **dadurch gekennzeichnet, dass** an der Abdeckplatte (13) Halteklammern (21) für die Stäbe (22) derart angebracht sind, dass sie bei in der Transportstellung befindlichem Grillrost (20) durch diesen hindurchragen.

12. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), wobei eine Abdeckplatte (13) vorgesehen ist, die unter dem Grillrost (20) in die Brennstoffschale (2) mit Abstand von deren Boden einlegbar ist, um in der Brennstoffschale (2) einen Transportraum (15) für Brennstoff (17, 18) abzugrenzen, **dadurch gekennzeichnet, dass** die Abdeckplatte (13) auf einer Seite mit Anschlusselementen (24) für die Aufstelleinrichtung (22) in deren Betriebszustand versehen ist.

13. Grill nach Anspruch 12, **dadurch gekennzeichnet, dass** die Abdeckplatte (13) auf der anderen Seite Aufstellfüße (25) aufweist.

14. Grill mit einem zweiteiligen, aus einer Brennstoffschale (2) und einer mit dieser durch eine lösbare Verschlusseinrichtung (8) verbindbaren Deckelschale (3) bestehenden Gehäuse (1), einem im Gehäuse (1) transportierbaren und in der Betriebsstellung des Grills an der Brennstoffschale (2) abstützbaren Grillrost (20), einer außen an der Brennstoffschale (2) lösbar anbringbaren, im Gehäuse (1) transportierbaren Aufstelleinrichtung (22, 13), und einem am Gehäuse (1) vorgesehenen Tragelement (10 bzw. 11), **dadurch gekennzeichnet, dass** an der Außenfläche des Gehäuses (1) ein Kopplungselement (12) angebracht ist, das lösbar mit einem Gegenkopplungselement an einem Fahrrad koppelbar ist.

15. Grill mit einer Brennstoffschale (2), an der ein Grillrost (20) abstützbar ist, und mit einer Grillzange (23), **dadurch gekennzeichnet, dass** die Grillzange (23) mit Greifelementen (29) zum formschlüssigen Erfassen und Tragen des Grillrosts (20) versehen ist.
